(19) Europäisches Patentamt
European Patent Office
Office européen des brevets

(11) **EP 2 523 020 A1**

(12) **DEMANDE DE BREVET EUROPEEN**

(43) Date de publication:
**14.11.2012 Bulletin 2012/46**

(51) Int Cl.:
**G01S 19/21** *(2010.01)*

(21) Numéro de dépôt: **12167246.3**

(22) Date de dépôt: **09.05.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **12.05.2011 FR 1101443**

(71) Demandeur: **Thales**
**92200 Neuilly Sur Seine (FR)**

(72) Inventeurs:
• **Letestu, Franck**
  **26300 Bourg-de-Péage (FR)**
• **Montagne, Bruno**
  **26240 Saint-Barthélémy de Vals (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(54) **Procédé et système de localisation d'interférences affectant un signal de radionavigation par satellite**

(57)  Procédé de localisation de sources interférant sur un signal de radionavigation par satellite reçu par un système récepteur comportant un réseau d'antennes comportant les étapes suivantes :
● une étape de calcul (201) de la matrice d'intercorrélation $R_{xx}$ des signaux reçus par les antennes élémentaires dudit réseau,
● une étape de détermination (203) d'une pluralité de vecteurs de pointage $S_s$ dont les composantes sont les gains d'antenne, dans une direction de pointage donnée $\vec{u}_s$, de chaque antenne élémentaire dudit réseau,
● une étape de calcul (204), pour chaque hypothèse de direction de pointage $\vec{u}_s$, de la puissance $P_{sf}$ du signal reçu dans cette direction par le réseau d'antennes,
● une étape de recherche (205) de maxima parmi l'ensemble des puissances $P_{sf}$ calculées et de localisation de sources interférentes dans les directions de pointage $\vec{u}_s$, correspondant auxdits maxima,

caractérisé en ce qu'il comporte en outre une étape (206) de levée d'ambigüité consistant à éliminer, de l'étape de recherche (205), les maxima relatifs à une ambigüité résultant de la géométrie du réseau.

FIG.2

EP 2 523 020 A1

**Description**

La présente invention concerne le domaine de la localisation de sources interférant sur un signal de radionavigation par satellite. Plus particulièrement, l'invention trouve son application dans le domaine des systèmes de radionavigation aéroportés.

Les systèmes de radionavigation par satellite peuvent être perturbés par des sources interférentes, intentionnelles ou non, par exemple des sources émettant un signal sur une fréquence proche de celle du signal de radionavigation ou présentant des harmoniques autour de la fréquence du signal de radionavigation.

En conséquence, le problème de la localisation de ces sources interférentes se pose afin de pouvoir en déduire des solutions permettant d'améliorer la fiabilité du système de radionavigation par satellite. En particulier, la localisation de sources interférentes porte sur la détermination du nombre de sources, de leur direction d'arrivée et éventuellement de leur spectre fréquentiel.

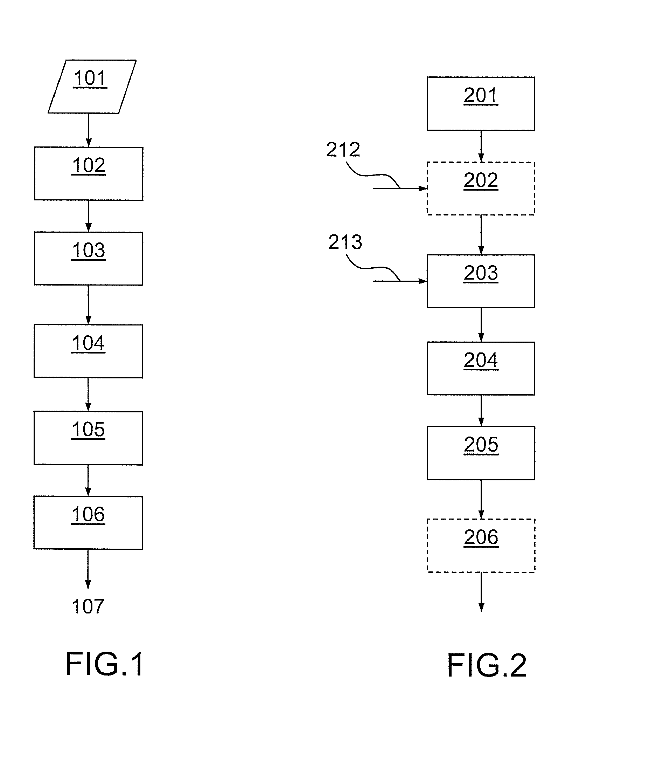

Une solution connue pour localiser des sources interférentes à partir des signaux reçus par un réseau d'antennes est basée sur l'algorithme MUSIC, de l'anglais « MUltiple SIgnal Classification » dont l'organigramme est représenté à la figure 1.

La matrice d'intercorrélation 101 des signaux reçus par un réseau d'antennes comportant une pluralité d'antennes offrant de la diversité spatiale est exploitée pour effectuer une décomposition 102 en valeurs propres et vecteurs propres. Les valeurs propres sont ensuite classées 103 par ordre décroissant pour déterminer 104 celles relatives au sous espace de signal et celles relatives au sous espace de bruit. Les deux sous espaces, signal et bruit, sont créés 105 et un test 106 de l'orthogonalité du vecteur de pointage avec le sous espace de bruit est réalisé. Au final, un pic 107 est obtenu pour la valeur correspondant à la direction d'arrivée du signal interférent.

Un inconvénient de cette méthode est qu'elle est difficilement implémentable sur des processeurs à ressources limitées, en particulier pour un système aéroporté, du fait de sa complexité. En effet, l'étape 102 de décomposition de la matrice d'intercorrélation en valeurs propres et vecteurs propres engendre un nombre d'opérations conséquent.

La présente invention propose une solution moins complexe en charge de calcul et plus adaptée à une implémentation sur des processeurs embarqués pour lesquels les ressources sont limitées.

A cet effet, l'invention a pour objet un procédé de localisation de sources interférant sur un signal de radionavigation par satellite reçu par un système récepteur comportant un réseau d'antennes comportant au moins les étapes suivantes :

- une étape de calcul de la matrice d'intercorrélation $R_{xx}$ des signaux reçus par les antennes élémentaires dudit réseau,
- une étape de détermination d'une pluralité de vecteurs de pointage $s_s$ dont les composantes sont les gains d'antenne, dans une direction de pointage donnée $\vec{u}_s$ de chaque antenne élémentaire dudit réseau,
- une étape de calcul, pour chaque hypothèse de direction de pointage $\vec{u}_s$ de la puissance $P_{sf}$ du signal reçu dans cette direction par le réseau d'antennes,
- une étape de recherche de maxima parmi l'ensemble des puissances $P_{sf}$ calculées et de localisation de sources interférentes dans les directions de pointage $\vec{u}_s$ correspondant auxdits maxima,

ledit procédé étant **caractérisé en ce qu'**il comporte en outre une étape de levée d'ambiguïté consistant à éliminer, de l'étape de recherche, les maxima relatifs à une ambiguïté résultant de la géométrie du réseau.

Dans une variante de réalisation de l'invention, l'étape de levée d'ambiguïté est réalisée par comparaison entre plusieurs localisations successives ou/et par comparaison entre plusieurs localisations réalisées par des équipements distants les uns des autres.

Dans une variante de réalisation de l'invention, une étape de traitement anti-interférence spatial ou spatiotemporel, mettant en oeuvre au moins un filtrage à P coefficients, est réalisée au préalable sur les signaux reçus par ledit réseau d'antenne.

Dans une variante de réalisation, le procédé selon l'invention comporte en outre :

- une étape de détermination, d'une pluralité de vecteurs $S_f$ d'hypothèses sur la fréquence f de l'onde interférente,

$$\vec{S}_f = [e^{j2\pi f_1} \dots e^{j2\pi f_1} \dots e^{j2\pi f_p}],$$ où les fréquences $f_i$, pour i variant de 1 à P sont données par la relation $f_i = \dfrac{i \cdot f}{F_e}$

avec $F_e$ la fréquence d'échantillonnage du signal,

- lesdits vecteurs de pointage $s_{sf}$ étant remplacés par leur produit de Kronecker $\vec{S}_{sf} = \vec{S}_s \otimes \vec{S}_f$ avec le vecteur $S_f$ d'hypothèses fréquentielles.

Dans une variante de réalisation de l'invention, la matrice d'intercorrélation $R_{xx}$ est déterminée à l'aide d'une décomposition sous la forme du produit d'une matrice triangulaire Φ avec la même matrice transposée conjuguée $\Phi^H$.

Dans une variante de réalisation de l'invention, le calcul desdites puissances $P_{sf}$ est effectué en résolvant l'équation (1) suivante: $P_{sf} = \dfrac{1}{S_{sf}^{H} \cdot Rxx^{-1} \cdot S_{sf}}$ , où $R_{xx}^{-1}$ est l'inverse de la matrice d'intercorrélation, et $S_{sf}^{H}$ est le transposé conjugué du vecteur $S_{sf}$.

Dans une variante de réalisation de l'invention, ladite équation (1) est résolue au moins à partir de la résolution des deux systèmes d'équation suivants :

$$v_i = \frac{S_{sf}(i) - \sum_{k=0}^{i-1} \phi_{ik} v_k}{\phi_{ii}}$$

$$z_i = \frac{v_i - \sum_{k=0}^{i-1} \phi_{ik}^{H} z_k}{\phi_{ii}}$$

avec $s_{sf}(i)$, la composante d'indice i du vecteur $s_{sf}$ et $\phi i_k$ la composante d'indice (i,k) de la matrice Φ, i variant de 0 à N.P-1, où N est le nombre d'antennes élémentaires dudit réseau, la puissance $P_{sf}$ étant égale à $P_{sf} = \dfrac{1}{S_{sf}^{H} . z}$ , où z est un vecteur dont les composantes sont les variables $z_i$

Dans une variante de réalisation de l'invention, le nombre de sources interférentes est égal à la valeur entière M qui minimise le critère F(M) suivant :

$$F(M) = K \times (L-M) \times \log\left( \frac{\dfrac{1}{L-M} \times \sum_{i=M+1}^{L} \lambda_i}{\left[ \prod_{i=M+1}^{L} \lambda_i \right]^{\frac{1}{L-M}}} \right) + M \times (2L-M)$$

où L est égal au nombre d'antennes N que multiplie le nombre de coefficients P du filtre mis en oeuvre par l'étape de traitement d'antenne,

K est le nombre d'échantillons de signal sur lequel est estimée la matrice d'intercorrélation $R_{xx}$,

$\lambda_i$ sont les valeurs propres de la matrice d'intercorrélation $R_{xx}$.

Dans une variante de réalisation de l'invention, les valeurs propres $\lambda_i$ sont remplacées, dans le critère F(M), par les valeurs diagonales de la matrice triangulaire Φ.

Dans une variante de réalisation de l'invention, le choix des hypothèses de direction de pointage est réalisé par dichotomie.

Dans une variante de réalisation, le procédé selon l'invention comporte en outre une étape de détermination de la position géographique exacte des sources interférentes par triangulation entre les informations de localisation fournies par une pluralité d'équipements distants les uns des autres.

L'invention a également pour objet un système de radio-navigation par satellite comportant au moins un réseau d'antennes destiné à recevoir un signal de radio-navigation par satellite, un module de traitement anti-interférences adapté à supprimer les interférences impactant ledit signal et un module de réception GNSS, **caractérisé en ce qu'**il comporte en outre un module de localisation de sources interférentes adapté à mettre en oeuvre le procédé de localisation selon l'invention.

Dans une variante de réalisation du système selon l'invention, l'étape de calcul de la matrice d'intercorrélation $R_{xx}$ est exécutée par le module de traitement anti-interférences qui transmet ladite matrice $R_{xx}$ au module de localisation.

D'autres caractéristiques et avantages de l'invention apparaîtront à l'aide de la description qui suit faite en regard de dessins annexés qui représentent :

- la figure 1, un organigramme illustrant les étapes de l'algorithme MUSIC,
- la figure 2, un organigramme illustrant les étapes de mise en oeuvre du procédé selon l'invention,
- la figure 3, un diagramme en trois dimensions représentant le niveau de puissance en fonction des hypothèses d'azimut et de site,
- la figure 4a, un diagramme représentant, en vue de coupe, la puissance du signal interférent en fonction de l'angle d'azimut en abscisse et de l'angle de site en ordonnée,
- la figure 4b, un diagramme représentant le spectre de l'onde interférente en fonction de l'angle d'azimut pour un angle de site fixé,
- la figure 4c, un diagramme représentant le spectre de l'onde interférente en fonction de l'angle de site pour un angle d'azimut fixé,
- les figures 5a, 5b et 5c, trois diagrammes équivalents aux figures 4a, 4b et 4c dans le cas où une ambigüité de localisation est détectée,
- la figure 6, un synoptique d'une première variante du système de radio-navigation selon l'invention,
- la figure 7, un synoptique d'une seconde variante du système de radio-navigation selon l'invention.

La figure 2 schématise, sur un organigramme les étapes de mise en oeuvre du procédé de localisation d'interférences selon l'invention. Ledit procédé est exécuté par un système de radionavigation par satellite, fonctionnant en mode réception, comportant au moins un réseau de N antennes à diversité spatiale relié à des moyens de traitement du signal reçu par ce réseau.

Dans une première étape 201, la matrice d'intercorrélation $R_{xx}$ des signaux reçus par les N antennes est déterminée. Une des solutions possible pour déterminer cette matrice en limitant la complexité des calculs consiste à l'estimer en utilisant un algorithme connu du type QRD-RLS « QR Decomposition Recursive Least Square » qui met en oeuvre une décomposition dite QR en matrices triangulaires. La matrice d'intercorrélation est alors obtenue par le produit de deux matrices triangulaires $R_{xx} = \Phi . \Phi^H$, où $^H$ désigne l'opérateur conjugué transposé.

Dans le cas où une étape de traitement anti-interférence spatial SAP « Space Adaptive Processing » ou spatio-temporel STAP « Space Time Adaptive Processing » est appliquée au préalable sur les signaux délivrés par le réseau d'antenne, la matrice d'intercorrélation $R_{xx}$ est alors de dimension N par P, où P est le nombre de coefficients temporels du filtre utilisé par l'algorithme de traitement anti-interférence.

Afin d'améliorer les performances et de compenser les défauts des antennes élémentaires, le calcul de la matrice d'intercorrélation $R_{xx}$ peut utiliser la connaissance des diagrammes de chaque antenne du réseau en phase et en gain.

D'autres méthodes ou algorithmes connus de l'Homme du métier peuvent être utilisés pour déterminer la matrice d'intercorrélation $R_{xx}$ à partir des N signaux reçus.

Dans une deuxième étape 202, le nombre de sources interférentes est déterminé. Optionnellement, cette information peut être considérée connue et forcée à une valeur donnée 212. Dans le cas contraire, elle est déterminée à partir de la recherche d'un minimum sur un critère F(M) donné. Ce critère prend en compte les informations suivantes : le nombre d'antennes N, le nombre de coefficients P du filtre du module de traitement anti-interférences et le nombre K d'échantillons de signal, pour chaque voie, à partir desquels est calculée la matrice d'intercorrélation $R_{xx}$. Le critère F(M) peut être formulé à l'aide de la relation suivante :

$$F(M) = K \times (L-M) \times \log \left( \frac{\frac{1}{L-M} \times \sum_{i=M+1}^{L} \lambda_i}{\left[ \prod_{i=M+1}^{L} \lambda_i \right]^{\frac{1}{L-M}}} \right) + M \times (2L-M) \quad (1)$$

L est égal au produit de N par P et $\lambda_i$ sont les valeurs propres de la matrice d'intercorrélation $R_{xx}$. Le nombre de sources interférentes est donné par la valeur de M qui minimise le critère F. Les valeurs propres $\lambda_i$ sont obtenues à partir de la diagonalisation de la matrice $R_{xx}$. Dans le cas où la matrice d'intercorrélation est déterminée à partir d'une décomposition

sous forme $R_{xx} = \Phi . \Phi^H$, les valeurs propres $\lambda_i$ peuvent être remplacées par les valeurs de la diagonale de la matrice triangulaire $\Phi$ ce qui présente l'avantage d'éviter les calculs couteux engendrés par une décomposition en vecteurs propres de la matrice $R_{xx}$.

Dans une troisième étape 203, un maillage spatial ou spatio-fréquentiel est défini par l'intermédiaire d'une pluralité de vecteurs de pointages afin de déterminer la plage de recherche spatiale et/ou fréquentielle des sources interférentes. Les paramètres 213 relatifs à la plage et la résolution de recherche en azimut, en site et en fréquence peuvent être prédéterminés, par exemple par un utilisateur du procédé selon l'invention.

Dans le cas d'une recherche uniquement spatiale des sources interférentes, le vecteur de pointage $\vec{S}_s$, pour une direction de pointage s donnée définie par une hypothèse d'angle d'azimut et d'angle de site, est défini par

$$\vec{S}_s = [G_{s_1} e^{j\frac{2\pi(\vec{c}_1 \cdot \vec{u}_s)}{\lambda}} \quad ... \quad G_{s_{N-1}} e^{j\frac{2\pi(\vec{c}_{N-1} \cdot \vec{u}_s)}{\lambda}} \quad G_{s_N} e^{j\frac{2\pi(\vec{c}_N \cdot \vec{u}_s)}{\lambda}} ],$$

avec :

le vecteur unitaire de la direction de pointage s,
$\vec{c}_i$ : le vecteur donnant la direction de pointage pour l'antenne i du réseau d'antennes comportant N antennes élémentaires,
$G_{S_i}$ : le gain complexe de l'antenne i dans la direction de pointage s.

Les composantes $G_{s_{N-1}} e^{j\frac{2\pi(\vec{c}_{N-1} \cdot \vec{u}_s)}{\lambda}}$ du vecteur $\vec{S}_s$ représentent le gain d'une antenne élémentaire du réseau dans la direction de pointage définie par le vecteur $\vec{u}_s$

Dans une variante de réalisation de l'invention pour laquelle une localisation fréquentielle des sources interférentes est également mise en oeuvre, on définit le vecteur de pointage $\vec{S}_{sf}$ comme étant égal au produit de Kronecker entre le vecteur de pointage spatial $\vec{S}_s$ et un vecteur d'hypothèse fréquentielle $\vec{S}_f = [e^{j2\pi f_1} \quad ... \quad e^{j2\pi f_{P-1}} \quad e^{j2\pi f_P}]$, pour une fréquence f donnée dans la bande de fréquence recherchée :

$$\vec{S}_{sf} = \vec{S}_s \otimes \vec{S}_f$$

Le vecteur résultant $\vec{S}_{sf}$ est de taille N.P et est calculé pour chaque hypothèse spatiale et fréquentielle. Les fréquences $f_1,... ,f_i,...,f_P$ utilisées pour construire le vecteur d'hypothèse fréquentielle $S_f$ sont reliées à la fréquence f par la relation suivante : $f_i = \frac{i \cdot f}{F_e}$, i variant de 1 à P et $F_e$ étant la fréquence d'échantillonnage du signal.

Dans une quatrième étape 204, pour chaque hypothèse spatiale ou spatio-fréquentielle, la puissance $P_{sf}$ du signal reçu est déterminée à l'aide de la relation suivante :

$$P_{sf} = \frac{1}{S_{sf}{}^H \cdot Rxx^{-1} \cdot S_{sf}} \quad (2)$$

La puissance $P_{sf}$ est celle du signal obtenu en sortie du filtre spatial ou spatio-temporel utilisé par l'algorithme de traitement anti-interférences sous contrainte d'une part d'un gain unitaire dans la direction de visée du réseau d'antennes et d'autre part de réjection des sources interférentes dans les autres directions.

L'équation (2) est obtenue à partir des relations suivantes, où w est le vecteur des coefficients dudit filtre et x le signal en entrée du filtre.

$$P_{sf} = y.y^H$$

$$y = w^H . x$$

$$w = \frac{R_{xx}^{-1} . S_{sf}}{S_{sf}^{H} . R_{xx}^{-1} . S_{sf}}$$

L'équation (2) peut être résolue avantageusement en utilisant la méthode suivante. Dans un premier temps, l'équation (2) est séparée en deux sous-équations :

$$P_{sf} = \frac{1}{S_{sf}^{H} . z} \qquad (3)$$

$$R_{xx} . z = S_{sf} \qquad (4)$$

En utilisant la décomposition QR de la matrice d'intercorrélation, $R_{xx} = \Phi . \Phi^H$, la résolution de l'équation (4) se ramène à la résolution des deux systèmes triangulaires suivants :

$$\begin{cases} \phi . v = S_{sf} \\ \phi^H . z = v \end{cases}$$

ou encore

$$v_i = \frac{S_{sf}(i) - \sum_{k=0}^{i-1} \phi_{ik} v_k}{\phi_{ii}} \qquad (5)$$

$$z_i = \frac{v_i - \sum_{k=0}^{i-1} \phi_{ik}^{H} z_k}{\phi_{ii}} \qquad (6)$$

avec i variant de 0 à NxP-1

A partir de la résolution des systèmes (5) et (6) on en déduit une estimée de la puissance $P_{sf}$ du signal reçu pour chaque hypothèse spatiale s et optionnellement chaque hypothèse fréquentielle f.

Au final, on obtient une matrice des puissances $P_{sf}$ contenant l'ensemble des puissances aux différentes hypothèses spatiales et/ou fréquentielles définies.

Dans une variante de réalisation de l'invention, les paramètres 213 de recherche peuvent être mis à jour itérativement pour réaliser une localisation par dichotomie en modifiant progressivement les plages de recherche spatiale et/ou fréquentielles et ce afin d'optimiser le nombre de calculs nécessaires pour arriver à un résultat précis. La localisation peut également être effectuée dans un premier temps dans le domaine spatial uniquement puis dans le domaine fréquentiel une fois que la direction d'arrivée des sources interférentes est localisée.

Dans une étape 205, la matrice des puissances $P_{sf}$ est tout d'abord parcourue selon la dimension fréquentielle afin de ne retenir que l'hypothèse fréquentielle qui correspond aux maxima de puissance. Dans un second temps la matrice $P_{sf}$ est parcourue, pour l'hypothèse fréquentielle retenue, selon la dimension spatiale et les M maximum locaux, avec M égal au nombre de sources interférentes, sont retenus ainsi que les directions de pointage associées. Pour chacune des sources interférentes ainsi localisées, l'hypothèse fréquentielle retenue permet d'identifier leur localisation dans le spectre fréquentiel.

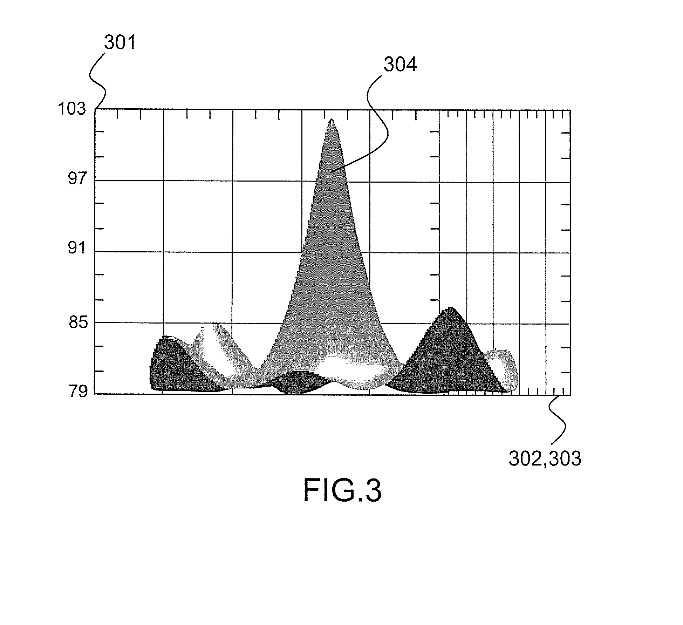

La figure 3 schématise l'allure de la matrice des puissances $P_{sf}$ représentée sur un diagramme en trois dimensions. L'axe vertical 301 correspond au niveau de puissance, pour l'hypothèse fréquentielle pour laquelle la puissance est maximale, les axes d'abscisse 302 et d'ordonnée 303 correspondent respectivement aux hypothèses d'angle d'azimut et de site définissant les hypothèses spatiales Le maximum 304 donne, par ses coordonnées en abscisse et en ordonnée, la direction d'arrivée (définie par un angle d'azimut et un angle de site). L'hypothèse fréquentielle retenue donne une estimation de la fréquence d'émission de l'onde interférente.

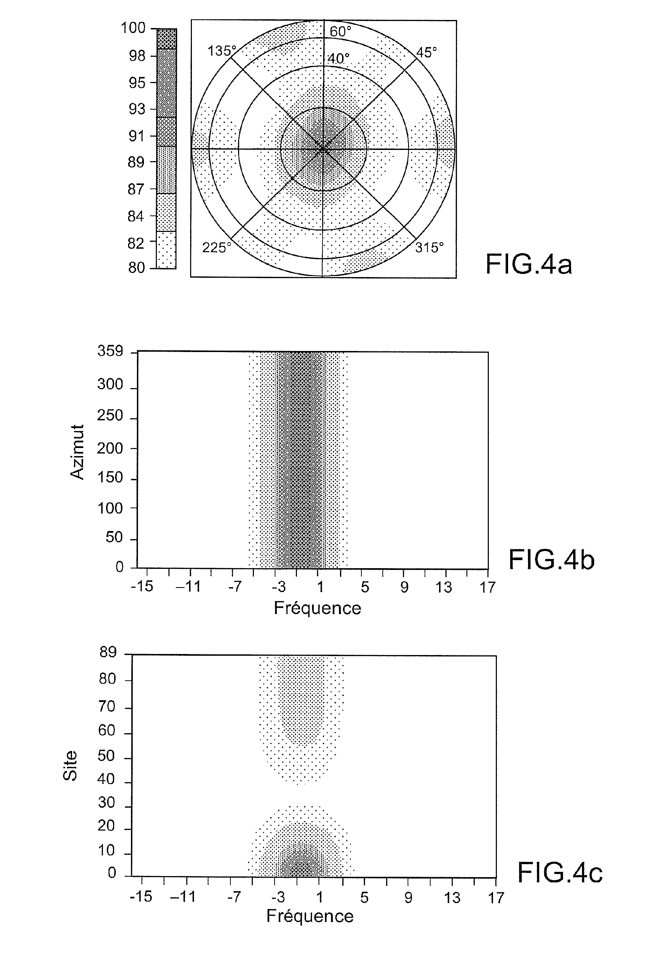

A titre d'illustration, la figure 4 schématise, sur trois diagrammes, les résultats obtenus pour la localisation d'une source interférente au zénith, c'est-à-dire émettant une onde dont la direction d'arrivée est vue par le réseau d'antennes selon un angle d'azimut et un angle de site nuls.

La figure 4a représente la puissance du signal interférent en fonction de l'angle d'azimut en abscisse et de l'angle de site en ordonnée, il s'agit d'une vue en coupe de la figure 3 pour laquelle seuls les maxima dépassant un seuil donné sont conservés.

La figure 4b représente le spectre de l'onde interférente en fonction de l'angle d'azimut pour un angle de site fixé.

La figure 4c représente le spectre de l'onde interférente en fonction de l'angle de site pour un angle d'azimut fixé.

En fonction de la direction d'arrivée de l'onde interférente et de la géométrie du réseau d'antennes, notamment de la distance entre antennes élémentaires vue selon la direction d'arrivée, des ambigüités peuvent apparaitre. De telles ambigüités apparaissent dans la matrice des puissances $P_{sf}$ sous forme de maxima de puissance de niveaux proches des niveaux des maxima associés aux sources interférentes mais provenant de directions d'arrivée différentes.

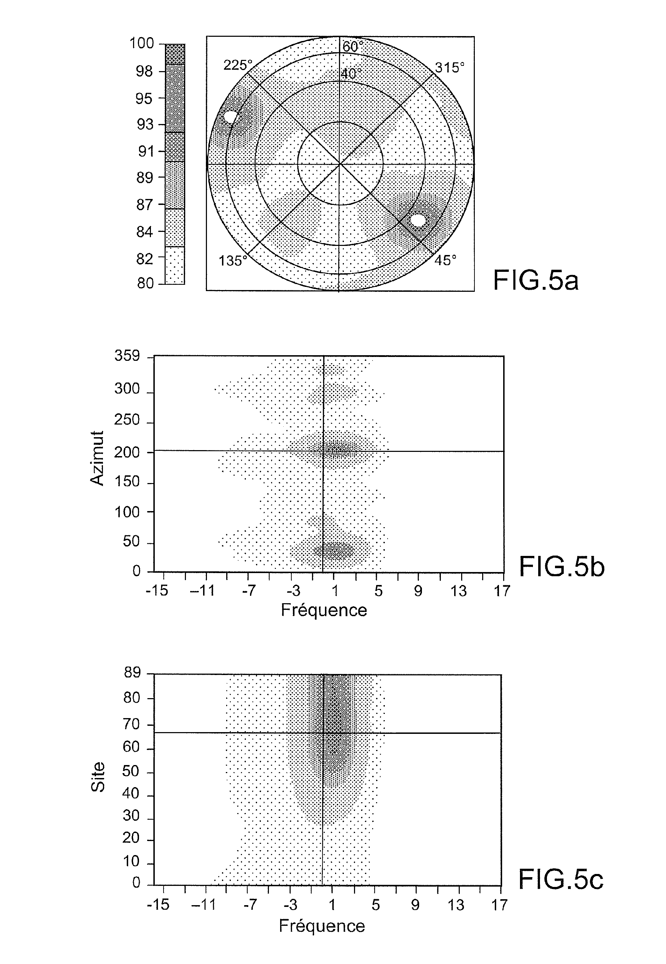

A titre d'illustration, la figure 5 schématise, sur trois diagrammes, les résultats obtenus pour la localisation d'une source interférente selon un angle d'azimut de 37° et un angle de site de 49° et pour laquelle une ambigüité est détectée pour un angle d'azimut de 204° et un angle de site de 66°.

La figure 5a représente la puissance de l'onde interférente en fonction des angles d'azimut et de site.

La figure 5b représente le spectre de l'onde interférente en fonction de l'angle d'azimut pour un angle de site fixé.

La figure 5c représente le spectre de l'onde interférente en fonction de l'angle de site pour un angle d'azimut fixé.

Dans une étape 206, une levée d'ambigüité est réalisée afin d'éliminer les maxima correspondant à des ambigüités dues à la géométrie du réseau. En fonction de la direction d'arrivée de l'onde interférente vue de chaque antenne élémentaire et de l'espacement entre antennes élémentaires, il est possible de déterminer la localisation spatiale, en site et azimut, d'une ambigüité par rapport à un pic de puissance relatif à une véritable source interférente. Plusieurs méthodes sont envisageables pour éliminer ces ambigüités dans la sélection des maxima de la matrice des puissances $P_{sf}$.

Une première méthode consiste à réaliser une consolidation entre plusieurs localisations successives au cours du temps. Dans le cas d'un porteur mobile, par exemple un véhicule, en particulier un aéronef, la présence d'ambigüités dépend de la direction d'arrivée de l'onde interférente par rapport au plan du réseau d'antennes. Ainsi, en fonction de la direction de l'onde incidente, les ambigüités apparaissent ou disparaissent alors que les interférences restent présentes, il est donc possible d'éliminer les pics ambigus en exploitant plusieurs réalisations de matrices successives.

Une autre méthode consiste à consolider les informations issues de plusieurs équipements distincts mettant en oeuvre le procédé de localisation selon l'invention. Par corrélation, il est possible d'identifier les sources interférentes communes aux résultats de localisation fournis par les différents équipements et d'éliminer les ambigüités. En effet, celles-ci seront situées sur des directions d'arrivée différentes pour chaque équipement puisque leur position est liée à la géométrie et à l'orientation du réseau d'antennes.

Une méthode hybride peut également être envisagée en exploitant à la fois une succession de mesures de matrices de puissances au fil du temps et les réalisations fournies par différents équipements distants les uns des autres.

Dans une autre variante de réalisation de l'invention, les directions d'arrivée estimées des ondes interférentes fournies par plusieurs porteurs peuvent être agrégées pour obtenir la position géographique exacte de la ou des sources interférentes par une méthode de triangulation associée à un filtrage approprié.

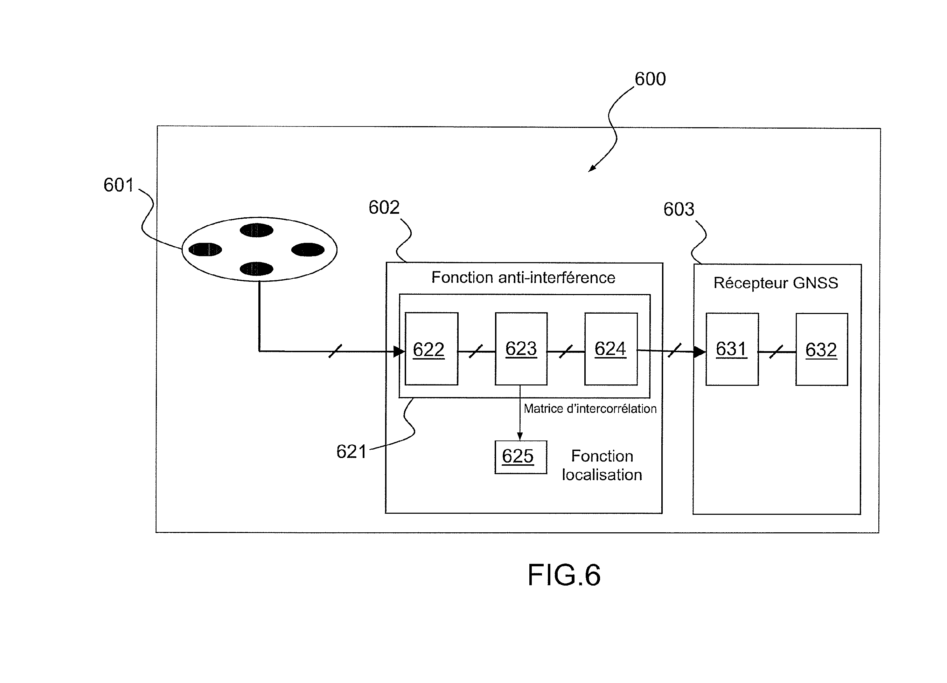

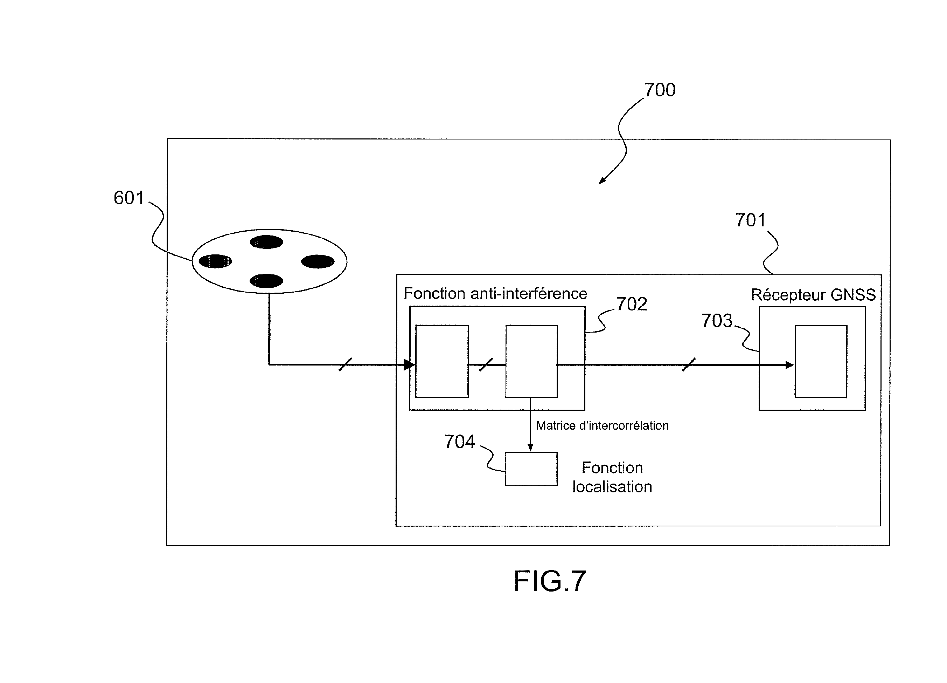

Les figures 6 et 7 schématisent, sur deux synoptiques, deux variantes de réalisation du système mettant en oeuvre le procédé selon l'invention.

Sur la figure 6 est représenté un système de radio-navigation par satellite 600 comportant un réseau d'antennes 601 destiné à recevoir un signal de radio-navigation, un module de traitement d'antennes 602 et un module de réception de signaux de radio-navigation 603 ou récepteur GNSS 603. Le module de traitement d'antennes 602 comporte au moins un module de traitement anti-interférence 621 adapté à réaliser une fonction de traitement de signal spatial SAP ou spatio-temporel STAP pour éliminer l'impact des interférences dans le signal reçu avant que celui-ci ne soit transmis au récepteur GNSS 603. Le module de traitement anti-interférence 621 comporte au moins une première carte 622 de transposition en fréquence basse et numérisation, une deuxième carte numérique 623 réalisant la fonction de traitement de signal adaptée à supprimer l'influence des interférences et une troisième carte 624 de transposition en fréquence haute. Le récepteur GNSS 603 comporte lui-même une première carte 631 de transposition en fréquence basse et numérisation et une seconde carte numérique 632 adaptée à réaliser les traitements de navigation à partir des signaux de radio-navigation reçus. Le module de traitement anti-interférence 621 comporte en outre un module 625 de localisation de sources interférentes exécutant le procédé selon l'invention. Ce module 625 reçoit, de la carte de traitement numérique 623, la matrice d'intercorrélation des signaux reçus sur le réseau d'antennes 601 et est paramétré par des moyens externes lui fournissant des informations sur la géométrie et les caractéristiques du réseau d'antennes, notamment les diagrammes en gain et phase des antennes, ainsi que les plages de recherche spatiales et/ou fréquentielles et éventuellement le nombre de sources interférentes à localiser. Le module de localisation 625 d'interférences délivre en sortie les directions d'arrivée, en azimut et site, des ondes interférentes ainsi que leur occupation fréquentielle et leur nombre lorsque celui-ci n'a pas été renseigné comme paramètre d'entrée.

La figure 7 schématise une seconde variante de réalisation du système 700 selon l'invention pour lequel la fonction anti-interférence 702 est directement intégrée dans le récepteur GNSS 701 qui présente en outre une fonction GNSS 703. Cette variante de réalisation permet de supprimer les cartes de transposition 624,631 de sortie du module de traitement d'antenne et d'entrée du récepteur GNSS. Le module 704 de localisation d'interférences, selon l'invention, est comme dans le système décrit à la figure 6, relié à la carte de traitement numérique de la fonction anti-interférence ce qui permet, avantageusement, d'exploiter les calculs déjà réalisés pour déterminer la matrice d'intercorrélation $R_{xx}$.

## Revendications

1. Procédé de localisation de sources interférant sur un signal de radionavigation par satellite reçu par un système récepteur (600,700) comportant un réseau d'antennes (601) ledit procédé comportant les étapes suivantes :

   • une étape de calcul (201) de la matrice d'intercorrélation $R_{xx}$ des signaux reçus par les antennes élémentaires dudit réseau (601),
   • une étape de détermination (203) d'une pluralité de vecteurs de pointage $S_s$ dont les composantes sont les gains d'antenne, dans une direction de pointage donnée $\vec{u}_s$ de chaque antenne élémentaire dudit réseau (601),
   • une étape de calcul (204), pour chaque hypothèse de direction de pointage $\vec{u}_s$ de la puissance $P_{sf}$ du signal reçu dans cette direction par le réseau d'antennes (601),
   • une étape de recherche (205) de maxima parmi l'ensemble des puissances $P_{sf}$ calculées et de localisation de sources interférentes dans les directions de pointage $\vec{u}_s$ correspondant auxdits maxima,
   **caractérisé en ce que** ledit procédé comporte en outre une étape (206) de levée d'ambigüité consistant à éliminer, de l'étape de recherche (205), les maxima relatifs à une ambigüité résultant de la géométrie du réseau (601).

2. Procédé selon la revendication 1 **caractérisé en ce que** l'étape (206) de levée d'ambigüité est réalisée par comparaison entre plusieurs localisations successives ou/et par comparaison entre plusieurs localisations réalisées par des équipements distants les uns des autres.

3. Procédé selon l'une des revendications 1 ou 2 **caractérisé en ce qu'**une étape de traitement anti-interférence spatial ou spatio-temporel, mettant en oeuvre au moins un filtrage à P coefficients est réalisée au préalable sur les signaux reçus par ledit réseau d'antenne (601).

4. Procédé selon la revendication 3 **caractérisé en ce qu'**il comporte en outre :

   • une étape de détermination d'une pluralité de vecteurs $S_f$ d'hypothèses sur la fréquence f de l'onde interférente,

   $\vec{S}_f = [e^{j2\pi f_1} \dots e^{j2\pi f_1} \dots e^{j2\pi f_P}]$, où les fréquences $f_i$, pour i variant de 1 à P sont données par la relation $f_i = \dfrac{i \cdot f}{F_e}$

   avec $F_e$ la fréquence d'échantillonnage du signal,
   • lesdits vecteurs de pointage $S_{sf}$ étant remplacés par leur produit de Kronecker $\vec{S}_{sf} = \vec{S}_s \otimes \vec{S}_f$ avec le vecteur $S_f$ d'hypothèses fréquentielles.

5. Procédé selon la revendication 4 **caractérisé en ce que** la matrice d'intercorrélation $R_{xx}$ est déterminée à l'aide d'une décomposition sous la forme du produit d'une matrice triangulaire $\Phi$ avec la même matrice transposée conjuguée $\Phi^H$.

6. Procédé selon la revendication 5 **caractérisé en ce que** le calcul desdites puissances $P_{sf}$ est effectué en résolvant l'équation (1) suivante :

$$P_{sf} = \frac{1}{S_{sf}^{\ H} \cdot Rxx^{-1} \cdot S_{sf}}$$ , où $Rxx^{-1}$ est l'inverse de la matrice d'intercorrélation, et

$$S_{sf}^{\ H}$$ est le transposé conjugué du vecteur $S_{sf}$.

7. Procédé selon la revendication 6 **caractérisé en ce que** ladite équation (1) est résolue au moins à partir de la résolution des deux systèmes d'équation suivants :

$$v_i = \frac{S_{sf}(i) - \sum_{k=0}^{i-1} \phi_{ik} v_k}{\phi_{ii}}$$

$$z_i = \frac{v_i - \sum_{k=0}^{i-1} \phi_{ik}^H z_k}{\phi_{ii}}$$

avec $S_{sf}(i)$, la composante d'indice i du vecteur $S_{sf}$ et $\phi_{ik}$ la composante d'indice (i,k) de la matrice $\Phi$, i variant de 0 à N.P-1, où N est le nombre d'antennes élémentaires dudit réseau (601), la puissance $P_{sf}$ étant égale à

$$P_{sf} = \frac{1}{S_{sf}^{\ H} . z}$$ , où z est un vecteur dont les composantes sont les variables $Z_i$

8. Procédé selon la revendication 7 **caractérisé en ce qu'**il comporte en outre une étape de détermination du nombre de sources interférentes égal à la valeur entière M qui minimise le critère F(M) suivant :

$$F(M) = K \times (L-M) \times \log\left( \frac{\dfrac{1}{L-M} \times \sum_{i=M+1}^{L} \lambda_i}{\left[ \prod_{i=M+1}^{L} \lambda_i \right]^{\frac{1}{L-M}}} \right) + M \times (2L-M)$$

où L est égal au nombre d'antennes N que multiplie le nombre de coefficients P du filtre mis en oeuvre par l'étape de traitement d'antenne,
K est le nombre d'échantillons de signal sur lequel est estimée la matrice d'intercorrélation $R_{xx}$,
$\lambda_i$ sont les valeurs propres de la matrice d'intercorrélation $R_{xx}$.

9. Procédé selon la revendication 8 **caractérisé en ce que** les valeurs propres $\lambda_i$ sont remplacées, dans le critère F(M), par les valeurs diagonales de la matrice triangulaire $\Phi$.

**10.** Procédé selon l'une des revendications précédentes **caractérisé en ce que** le choix des hypothèses de direction de pointage est réalisé par dichotomie.

**11.** Procédé selon l'une des revendications précédentes **caractérisé en ce qu'**il comporte en outre une étape de détermination de la position géographique exacte des sources interférentes par triangulation entre les informations de localisation fournies par une pluralité d'équipements distants les uns des autres.

**12.** Système de radio-navigation par satellite (600,700) comportant au moins un réseau d'antennes (601) destiné à recevoir un signal de radio-navigation par satellite, un module de traitement anti-interférences (621,702) adapté à supprimer les interférences impactant ledit signal et un module de réception GNSS (603,703), **caractérisé en ce qu'**il comporte en outre un module (625,704) de localisation de sources interférentes adapté à mettre en oeuvre le procédé de localisation selon l'une des revendications 1 à 11.

**13.** Système selon la revendication 12 **caractérisé en ce que** l'étape de calcul (201) de la matrice d'intercorrélation $R_{xx}$ est exécutée par le module de traitement anti-interférences (621,702) qui transmet ladite matrice $R_{xx}$ au module (625,704) de localisation.

FIG.1

FIG.2

FIG.3

FIG.4a

FIG.4b

FIG.4c

FIG.5a

FIG.5b

FIG.5c

EP 2 523 020 A1

600

601

602

603

Fonction anti-interférence

Récepteur GNSS

622 | 623 | 624

631 | 632

Matrice d'intercorrélation

621

625 | Fonction localisation

FIG.6

FIG.7

601

701

Fonction anti-interférence

702

703

Récepteur GNSS

Matrice d'intercorrélation

704

Fonction localisation

EP 2 523 020 A1

16

Europäisches
Patentamt

European
Patent Office

Office européen
des brevets

**RAPPORT DE RECHERCHE EUROPEENNE**

Numéro de la demande

EP 12 16 7246

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | ANDREW BROWN ET AL: "Locating the Jammer using A/J Software Receiver", PROCEEDINGS OF ION GNSS 2004, 24 septembre 2004 (2004-09-24), pages 110-121, XP055017928, Long Beach, CA, USA * page 113, colonne de droite, section "Spectral Estimation Technique" * ----- | 1-13 | INV. G01S19/21 |
| A | US 2007/164902 A1 (BANG YOUNG-JO [KR] ET AL) 19 juillet 2007 (2007-07-19) * figure 2 * * alinéa [0037] - alinéa [0043] * ----- | 1-13 | |
| A | ZENG ZHAOHUA ET AL: "Research of Adaptive Beamforming Algorithm Based on Matrix Decomposition", INFORMATION ENGINEERING AND COMPUTER SCIENCE (ICIECS), 2010 2ND INTERNATIONAL CONFERENCE ON, IEEE, PISCATAWAY, NJ, USA, 25 décembre 2010 (2010-12-25), pages 1-4, XP031842320, DOI: 10.1109/ICIECS.2010.5678268 ISBN: 978-1-4244-7939-9 * pages 2-3, section " QR Decomposition Algorithm" * ----- | 1-13 | DOMAINES TECHNIQUES RECHERCHES (IPC) G01S |
| A | TAN C M ET AL: "Ambiguity in MUSIC and ESPRIT for direction of arrival estimation", ELECTRONICS LETTERS, IEE STEVENAGE, GB, vol. 38, no. 24, 21 novembre 2002 (2002-11-21), pages 1598-1600, XP006019330, ISSN: 0013-5194, DOI: 10.1049/EL:20021036 * page 1, alinéa 1 * ----- -/-- | 1-13 | |

Le présent rapport a été établi pour toutes les revendications

| Lieu de la recherche | Date d'achèvement de la recherche | Examinateur |
|---|---|---|
| Munich | 26 juin 2012 | Hekmat, Taymoor |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
...........................................................................
& : membre de la même famille, document correspondant

EPO FORM 1503 03.82 (P04C02)

**RAPPORT DE RECHERCHE EUROPEENNE**

Numéro de la demande

EP 12 16 7246

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | D. WILSON ET AL: "Development of an A/J System Using Available Antennas", PROCEEDINGS OF ION GNSS 2007, 25 septembre 2007 (2007-09-25), pages 164-175, XP55030876, Forth Worth, Tx, USA<br>* page 165, alinéa 3 *<br>* page 168, alinéa 2 *<br>----- | 1-13 | |
| A | K. GROMOV ET AL: "Interference Direction Finding for Aviation Applications of GPS", PROCEEDINGS OF ION GPS 1999, 14 septembre 1999 (1999-09-14), pages 115-123, XP55030877, Nashville, TN, USA<br>* page 117, alinéas 1,2 *<br>----- | 1-13 | |
| A | R. C. Hansen: "Phased Array Antennas, Second Edition", 2009, John Willey & Sons, New Jersey, USA, XP002668496, ISBN: 978-0-470-40102-6 pages 244-246, * pages 244-246, section "planar array anetnna" *<br>----- | 1-13 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 26 juin 2012 | Hekmat, Taymoor |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 12 16 7246

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-06-2012

| Document brevet cité au rapport de recherche | Date de publication | Membre(s) de la famille de brevet(s) | Date de publication |
|---|---|---|---|
| US 2007164902 A1 | 19-07-2007 | KR 20070057429 A<br>US 2007164902 A1 | 07-06-2007<br>19-07-2007 |

EPO FORM P0460

Pour tout renseignement concernant cette annexe : voir Journal Officiel de l'Office européen des brevets, No.12/82